# EUROPEAN PATENT SPECIFICATION

(11) **EP 2 252 836 B1**
(45) Date of publication and mention of the grant of the patent: **10.10.2018**
(21) Application number: 09716321.6
(22) Date of filing: 27.02.2009
(51) Int. Cl.: F24F 13/24, G10K 11/16, F01N 1/10, F16L 55/033, F24F 13/02

(54) **SOUND ABSORBING BAFFLE AND ARRANGEMENT FOR A BAFFLE**
SCHALLDÄMPFUNGSWAND UND ANORDNUNG FÜR EINE WAND
DÉFLECTEUR ABSORBANT LES SONS ET AGENCEMENT POUR UN DÉFLECTEUR

(30) Priority: 06.03.2008 SE 0800520
(43) Date of publication of application: 24.11.2010
(73) Proprietor: Lindab AB, 269 82 Bastad (SE)
(72) Inventor: HULTMARK, Göran, S-426 76 Västra Frölunda (SE); HUSTED, Mette, S-3500 Vaerlöse (DK); KNUDSEN, Morten, S-3520 Farum (DK)
(74) Representative: Zacco Sweden AB
(86) International application number: PCT/SE2009/050218
(87) International publication number: WO 2009/110843

(56) References cited:
- EP-A2- 0 921 358
- EP-A2- 1 262 666
- WO-A1-97/21024
- WO-A1-99/13274
- AU-B2- 747 141
- FR-A1- 2 447 069
- GB-A- 984 817
- US-A- 2 916 101
- US-A- 3 033 307
- US-A- 3 511 336
- US-B1- 6 260 658

## Description

### Technical field

The present invention relates to a baffle for use in a silencer intended for ventilation ducts and to a sound damping arrangement of baffles.

### Background

Ventilation ducts are intended to lead air in a specified direction, here called the longitudinal direction of the ventilation duct or the direction of air flow.

The air stream is usually provided by a fan which draws or pushes air through a ventilation duct.

It is known that fans in operation generate disturbing noise and various silencers for fitting in ventilation ducts have therefore been proposed with the object of absorbing such fan noise.

A known practice is to provide ventilation ducts with silencers in the form of panel-like baffles made of an acoustically damping material, e.g. glassfibre wool or rockwool, in a stabilising frame situated in a section of the ventilation duct, the baffle being disposed with a forward edge meeting the air stream coming in towards the silencer.

In circular ventilation ducts, a baffle is often used, whereas it is usual in ventilation ducts of rectangular cross-section that a silencer takes the form of a set of panel-like baffles placed side by side in a section of the ventilation duct.

Between adjacent baffles, between their respective main surfaces facing one another, there are gaps through which the air is allowed to flow. These gaps are thus parallel with the direction of air flow through the ventilation duct and the intention is that the main surfaces of the baffles should absorb noise from the air which passes through the gaps.

The dimensioning of silencers and baffles involves taking into account two main problems which classically counteract one another, viz. sound damping and pressure drop.

Generally speaking, known baffles may be described as falling into two main categories.

The first main category is baffles which substantially take the form of a rectangular cuboid, i.e. they are panels of uniform thickness. Thus the gaps between adjacent baffles will also be constant with respect to their width and hence also the cross-sectional area of the gaps. Baffles of this type are regarded as the most effective for damping of fan noise, since the distance over which effective sound damping can take place (constant and optimised gap width) is maximum when constituted by the extent of the whole baffle in the direction of flow.

The second main category of baffles are of diminishing thickness in the direction of ventilation air flow, i.e. the thickness of each baffle may be described as decreasing in the direction of flow so as to be smallest at the point where the air flow leaves the gaps. This means conversely that the gaps between adjacent baffles progressively increase in width and hence in cross-sectional area in the direction of flow. This solution entails a lower pressure drop across the silencer but has the disadvantage that the sound damping does not achieve as good results when a size of gap which is optimum for damping cannot be maintained over a distance. Two examples of above baffles are disclosed in US 6 260 658 B1 and US 3 033 307 A, which are of rectangular shape.

As mentioned above, the configuration of silencers for ventilation ducts faces the challenge of optimising the sound damping and minimising the pressure drop. The increased requirements for sound damping have also led to acceptance of a relatively higher pressure drop across a silencer, thereby leading to the need for relatively larger fans with consequently increased use of energy.

An object of the present invention is to mitigate or overcome the disadvantages indicated above of the state of the art and to propose a baffle which offers both effective sound damping and limited pressure drop.

This object is achieved with a baffle and silencer arrangement as first mentioned above and having the features which are defined in the independent claims set out below.

### General description of the invention

The baffle according to the present invention is of rectangular shape as viewed both from the side and in a vertical cross-section transverse to its longitudinal direction and comprises an acoustically damping material disposed in a shape-stabilising frame arrangement, and the baffle comprises in its longitudinal direction three zones represented by:
a forward end portion of tapering shape comprising the front edge of the baffle and adapted to meeting and dividing an incoming air stream,
a middle portion having substantially the shape of a rectangular cuboid and provided with plane-parallel main surfaces for the acoustically damping material for absorbing noise from a passing air stream, and
a rear end portion of tapering shape comprising the baffle's rear edge and adapted to regulating the reuniting of the divided and noise-damped air stream, wherein the frame arrangement has an aperture for each main surface, wherein the rear end portion (c) comprises a prolongation of the main surfaces and the shape-stabilizing frame arrangement comprises a back disposed in the rear end portion (c), having a smaller width than the width of the baffle and adapted to accommodating the rear edge of the acoustically damping material.

This apportionment of the baffle's configuration has proved to make unexpectedly good sound damping possible in combination with limited pressure drop.

The rear end portion may have a taper which is at least partly linear and forms an angle of incidence α to the longitudinal direction of the baffle, and the rear end portion may also constitute in whole or in part a prolongation of the main surfaces. This obviates any joints which would create disturbances in the air flow and generate noise where the air flow is at its highest velocity.

The rear end portion may in an embodiment have in the longitudinal direction of the baffle an extent w which is within the range 150 ≤ w ≤ 300 mm from the baffle's rear edge, the most preferable extent being w = 240 mm.

The angle α may in an embodiment be within the range 5° ≤ α ≤ 12°, the most preferable angle being α = 7°.

The back may also have an open and substantially U-shaped symmetrical profile with a linear bottom section which also constitutes the rear edge of the baffle and has wings extending from it in a linear manner with an extent which is smaller than or equal to w and has an angle of incidence α to the longitudinal direction of the baffle.

The extent of the wings from the bottom section may be within a range of between 2w/3 and w/3, most preferably w/2.

The forward end portion (a) may comprise a prolongation of the main surfaces and may have a taper, at least part of which is linear and forming an angle of incidence β to the longitudinal direction of the baffle.

The forward end portion (a) may thus also have a planar front, a curved edge transition with a radius r and a tapering prolongation of the main surfaces. The result will be that the air stream passing the transition to the acoustically absorbing material will have a relatively lower flow velocity than if this transition was situated where the baffle is widest.

The baffle according to the invention described above has provided unexpectedly good results with regard to both sound damping and pressure drop. The baffle according to the invention thus affords the possibility of creating relatively long and uniformly wide gaps by the second zone being provided with plane-parallel main surfaces, while at the same time the proposed configuration of the first zone reduces the intrinsic noise generation at the inlet of the silencer, and the third zone allows a regulated reuniting of the air streams which leave the gaps with a minimum of noise generation and pressure drop.

An advantageous sound damping arrangement has according to the present invention more than one baffle disposed in a rectangular section of a ventilation duct, with a constant gap width between main surfaces of the respective middle portions of adjacent baffles. Advantageous gap widths in this context may be within the range 50-150 mm.

A silencer which uses baffles according to the present invention has shown that it is possible to use a smaller gap width, with no change in pressure drop, than in baffles according to the state of the art, resulting in better damping with the same fan power requirement or the same damping with a lower fan power requirement, thereby saving energy.

These and other features and advantages of the invention are further explained in the description set out below of a preferred embodiment of the invention and alternatives thereto, which represent examples and therefore do not limit the scope of the invention's protection.

To facilitate comprehension, the text refers to the attached drawings, in which equivalent or similar items are given the same reference notation.

For the sake of clarity, the description set out below uses expressions and terms for components, items and parts which are adapted to the specific embodiment described and are not to be regarded as general limitations for the interpretation of the expressions used in the claims.

### Brief description of the drawings

Fig. 1 depicts schematically a silencer for rectangular ventilation ducts with baffles disposed in an arrangement according to an embodiment of the present invention.
Fig. 2 depicts a perspective view of a baffle according to an embodiment of the present invention.
Fig. 3 depicts a plan view of the baffle according to Fig. 2 as viewed from above.
Fig. 4 depicts in a perspective view with portions drawn apart of the baffle according to Fig. 2.

### Detailed description of embodiments

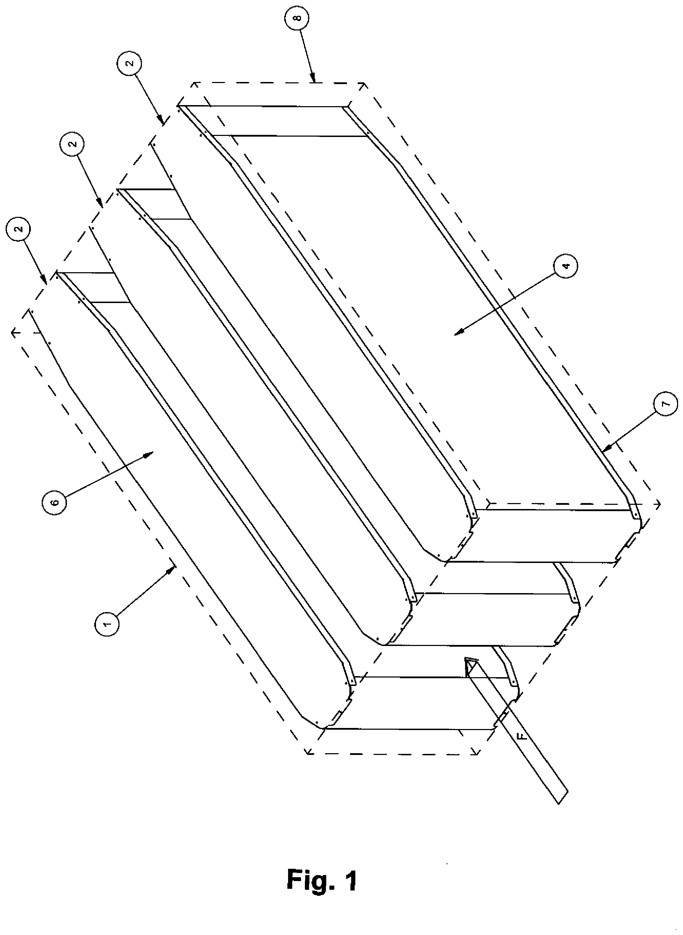

Fig. 1 depicts schematically a silencer 1 intended for fitting in a rectangular ventilation duct. The ventilation duct has an air stream moving through it in a direction of flow F and the silencer has three parallel baffles 2 disposed in it at a distance from one another to absorb noise from the air stream which passes in gaps around the baffles.

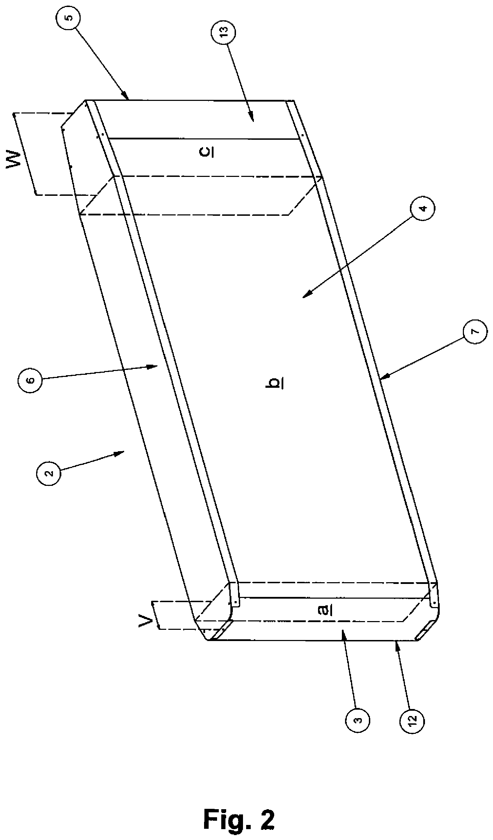

Referring also to Fig. 2, each baffle 2 has a front edge 3 which meets and divides the air stream in such a way that the air stream is caused to proceed into the gaps delineated laterally by main surfaces 4 of adjacent baffles and here laterally ultimately by sidewalls to the housing of the silencer. The baffle 2 also has a rear edge 5 after which the air streams passing through the gaps can be reunited, and an upper edge 6 and a lower edge 7 which are adjacent to the silencer's housing 8 (only indicated by broken lines) which supports the baffle and delineates the gaps in the vertical direction. The housing is here a rectangular duct section of the same dimensions as the duct for which the silencer is intended.

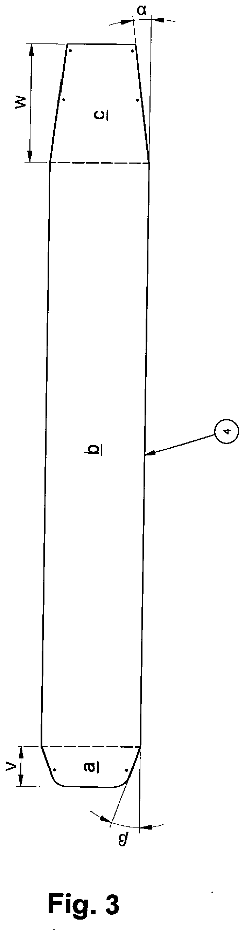

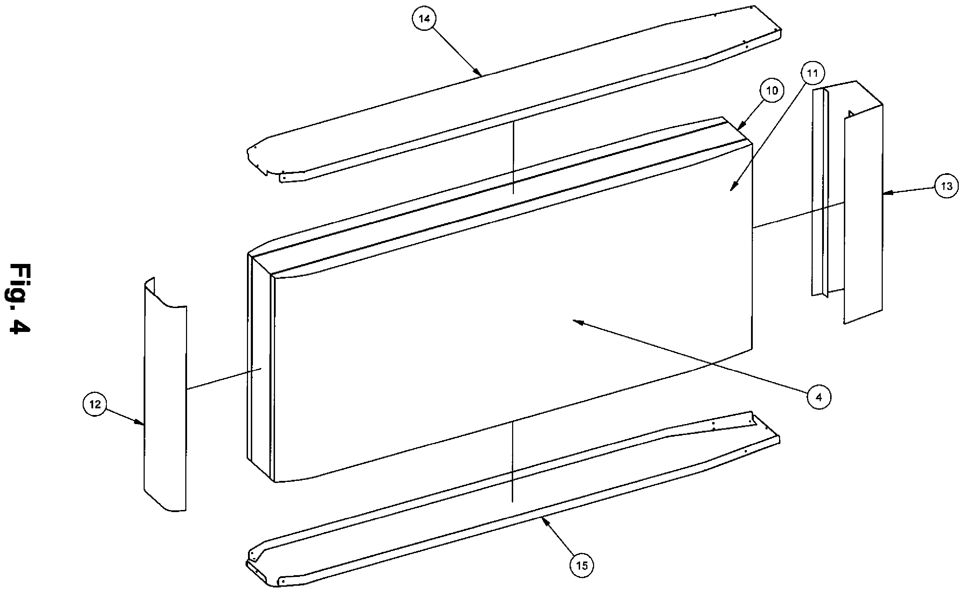

With reference to Figs. 2, 3 and 4, a baffle 2 according to the present invention comprises in its longitudinal direction three zones which even in a fitted active state in a silencer are parallel with the direction of flow of the air stream.

The first zone is represented by a forward end portion a which has an extent v in the longitudinal direction of the baffle and is intended to meet and divide the incoming air stream in such a way as to generate a minimum of noise and pressure drop.

The second zone is represented by a middle portion b intended to absorb noise from the passing air stream as effectively as possible while causing as little friction as possible in order to limit pressure drop arising from such friction.

The third zone is represented by a rear end portion c which has an extent w in the longitudinal direction of the baffle and is intended to bring the noise-damped air streams together in such a way as to generate a minimum of noise and pressure drop.

In the present embodiment, the middle portion b comprises a rectangular cuboid of an acoustically absorbing material in the form of a panel 10 of rockwool supported by a top element 14 and a bottom element 15 which form part of a frame arrangement 12, 13, 14, 15 which stabilises the baffle. To maximise the sound damping, the middle element should be made as long as possible, since it is along it that noise is absorbed. Accordingly, this middle portion should constitute as large a proportion of the total length of the baffle as possible. However, the maximum length of the baffle is often limited by external circumstances.

With the object of increasing the resistance of the panel 10 to mechanical influences, preventing loosening of fibres and reducing the friction of the air stream against the surface of the panel, in the present embodiment the surface of the panel is provided with a complete covering of glassfibre fabric 11. A further effect of the glassfibre fabric is that it can transmit sound waves to the absorbing material.

The forward tapering end portion a comprises here a front element 12 which is part of the frame arrangement, and a tapering portion of the panel 10. As illustrated in Figs. 2-4, the front element 12 has an open symmetrical and substantially U-shaped profile beginning with a linear bottom section which also constitutes the baffle's front edge 3, followed by a radius r which thereafter changes to a linear wing extending in a direction which forms an angle of incidence β to the longitudinal direction of the baffle. Good results have been achieved with the radius r within the range 15 ≤ r ≤ 60 mm.

As the front element has a width which is smaller than the width of the baffle and is adapted to accommodating the front edge of the panel, it is able to hold the forward end of the panel 10 clamped together and bring about the desired taper in the forward end portion a of the baffle Clamping the panel together is an effective way of achieving industrially the desired tapering shape.

The joint or disturbance formed in the surface of the baffle at the transition between the front element 12 and the panel 10 will also be at a location before the point where the passing air stream reaches its highest velocity, which is where the gap is smallest, i.e. along the middle portion b. This relatively lower velocity of the air at the transition between the front element 12 and the panel 10 reduces noise generation arising from the joint. Accordingly, it is advantageous to position the joint as far away as possible from the transition between the first and second zones, subject to the taper of the forward end portion being maintained. This taper may thus partly be non-linear or slightly curved as a result of the taper being achieved by clamping together an elastic material.

Another factor which reduces noise generation at the joint is that the air flow is subject to compression and change of direction. i.e. it does not continue to flow parallel with the front element 12 when it passes the edge of it.

Our experiments with various dimensions of the forward end portion a have shown good results with radii within the range 15 ≤ r ≤ 60 mm and particularly good results with radii within the range 25 ≤ r ≤ 50 mm. These radii help to ensure in a regulated manner that the air stream is divided and the formation of air vortices is diminished, thereby reducing noise generation at the inlet to the sound-damping gaps. In our embodiments, the radius also forms a circle arc with a centre angle of 70°. Alternative embodiments may have a centre angle within the range 45 - 80°.

The angle β has shown good results within the range 10° ≤ β ≤ 35°.

The angle β in the present embodiment is 20°, the radius r 30 mm and extent of the wing is smaller than or equal to the length v but long enough to be able to form a taper of the panel 10 along the forward end portion's extent v in the longitudinal direction of the baffle. In this embodiment, v = 80 mm and the extent of the wing v/2 = 40mm.

In alternative embodiments, said wings may also be eliminated in the front element, in which case the radii of the front element may be used to grip the clamped-together front edge of the panel in order to bring about desired tapering.

The baffle's rear end portion c comprises the rear element 13, the relating frame arrangement and a tapering portion of the panel 10.

The rear element 13 has an open substantially U-shaped symmetrical profile which begins with a linear bottom section which also constitutes the rear edge 5 of the baffle and has linear wings extending from it with an extent which is smaller than or equal to the rear end portion's extent w and has an angle of incidence α to the longitudinal direction of the baffle.

To minimise pulsation, turbulence or other noise-generating phenomena when the air stream leaves the baffle, it is advantageous that the transition between said bottom section and wing be sharp. If the back is for example made by bending a piece of sheetmetal, it is advantageous that the bending angle be sharp or with as small a radius as possible, preferably smaller than 5 mm and most preferably, as in the present embodiment example, smaller than 2 mm.

The angle α in the present embodiment is 7° and the extent of the wing w/3, i.e. long enough to form the desired taper of the panel 10. Thus there is here no need for the whole taper to be strictly linear, since a slight curvature is allowed where the taper is brought about, as here, by clamping together an elastic material.

The respective top element 14 and bottom element 15 of the frame arrangement are here bent pieces of sheetmetal with longitudinal folds extending past the respective upper and lower longitudinal edges of the panel 10 in order to support the panel 10. The respective top and bottom elements are also provided with suitable fastening means for firm connection to the front element 12 and the rear element 13 in order to form the frame which stabilises the baffle.

In the embodiment example described above, no height for the baffle was indicated or proposed. The reason for this is that the height of the baffle has no major influence on the sound damping or the pressure drop, given the same air velocity, but is determined usually by the ventilation duct to which the silencer is to be connected. Likewise, the width of the duct to which the silencer is to be connected and the desired gap width are determined by how many baffles form part of the silencer.

The parameters on the basis of which the silencer and baffles are optimised are gap width, pressure drop and damping. Usual gap widths are 50-200 mm and in the present embodiment the gap width is 100 mm.

We have found good results with baffles whose width between the plane-parallel main surfaces 4 is within a range of 150 to 250 mm. The width in the case of the baffle described above is 200 mm.

In the above embodiment example, rockwool was indicated as the acoustic damping material, but alternative acoustic absorbing materials may of course be used, e.g. glasswool, polyester fibre or the like.

To improve the surface characteristics of the acoustically absorbing material, its surface has here been described as possibly being clad with, for example, glassfibre fabric or the like. It should be noted that this is an example and that the general equivalents comprise also other covering materials or surface treatments for the acoustically absorbing material with the object of achieving the same characteristics, i.e. binding of fibres, greater resistance to mechanical influences, less friction and maintenance of absorbing characteristics, i.e. being substantially soft.

All parts of the frame arrangement in the present embodiment are made of sheetmetal bent to shape. The top element 14 and the bottom element 15 in the present embodiment are made alike and mutually interchangeable, which means that the baffle may also be inverted with respect to top and bottom. The constituent elements of the frame in the present embodiment are also joined together by rivets, although other fastening means or fastening methods known to one skilled in the art are of course also possible, e.g. threaded connections, snap connections, welded connections, adhesive bonding or the like, and it is also possible for the frame arrangement to be made of other materials.

The front element 12 and the rear element 13 in the present embodiment are adapted to effecting a tapering change of shape at the respective front and rear edges of the baffle. This is achieved in the present embodiment by the panel 10 being compressed by the respective elements 12; 13 to specified shape at the respective front and rear edges. In alternative embodiments, it is of course possible for shape changes of this type to be effected by the actual panel being formed with desired tapers, which, although it may well make manufacturing more expensive, means that the respective shaping function of the front element 12 and the rear element 13 can be toned down, in which case their configuration is focused on stabilising function.

Measurements based on the stated ranges of angle and dimensions of the rear end portion have shown unexpectedly low pressure drop with unchanged or improved sound damping relative to baffles according to either of the two types described in the introduction.

For certain applications, the baffle according to the present invention may be further improved by providing a resonance chamber in the baffle's rear end portion c, adjacent to the rear edge of the baffle. This chamber is surrounded by the rear edge of the acoustically absorbing material and by the back 13. This chamber contributes positively to damping of noise at low frequencies, typically within the range 125 to 500 Hz, by so-called resonance damping.

In a further embodiment of the present invention, the acoustically absorbing material, which has been described as a homogeneous panel 10 in one piece, may comprise a number of parts or modules, in which case their joints are preferably concealed by a surface fabric or the like or by treatment to prevent joints or the like increasing the friction or creating disturbances in the surface of the baffle which would lead to turbulence and noise. The acoustically absorbing material may also in a further embodiment be hollow if the thickness of the baffle is such that a sufficient noise-absorbing body can still be formed along the baffle's main surfaces.

In an alternative embodiment, the acoustically absorbing material/the panel 10 may comprise more than one panel arranged in layers in a sandwich structure, e.g. three panels which may then may possibly have mutually different material characteristics.

In another alternative embodiment, such a three-layer sandwich structure may have a middle panel which is somewhat shorter than the length of the baffle, in which case the desired tapering configuration of the respective forward and rear end portions of the baffle may be formed by the outer panels being pressed together where they extend past the middle panel, thereby reducing the compression of the material as compared with the noise-absorbing material being of uniform thickness. To further regulate the taper, said middle panel may have further layers of progressively longer panels in towards the middle of the middle panel.

In a further embodiment, the stabilising frame arrangement may be made of two rectangular frame elements, in which case the frame may be described as divided at a vertical plane parallel with the longitudinal direction of the baffle. Fitting a baffle with this frame solution entails placing the acoustically absorbing panel between the frame elements before they are fully assembled, which means that the panel will be clamped together and undergo shape change to form the tapering forward and rear portions when the frame elements are finally brought together and fixed.

It should also be noted that although the baffle according to the present invention has here been described more in connection with a rectangular silencer and a rectangular ventilation duct, the baffle according to the invention may also be used in a circular ventilation duct by being placed in a section thereof.

In a preferred silencer arrangement according to the present invention, the total length of the baffle is 1250 mm (± 250 mm), the forward end portion representing 80 mm and the rear end portion 240 mm, within previously indicated ranges. The width of the baffle is 200 mm (± 40 mm) and the baffles are disposed in the arrangement with gap spacing of 100 mm (± 20 mm) between respective main surfaces. The figures in parentheses indicate the ranges for adapting the arrangement to the respective ventilation duct while substantially maintaining good results. Other dimensioning and configurations entail referring to the above description of baffles and the ranges indicated there for various dimensions.

## Claims

1. A baffle for a silencer (1) for a ventilation duct, which baffle (2) is of rectangular shape as viewed both from the side and in vertical cross-section transverse to its longitudinal direction, comprises an acoustically damping material (10) disposed in a shape-stabilising frame arrangement (12, 13, 14, 15) and comprises in its longitudinal direction three zones represented by:
a forward end portion (a) of tapering shape comprising the front edge (3) of the baffle and adapted to meeting and dividing an incoming air stream,
a middle portion (b) having substantially the shape of a rectangular cuboid and provided with plane-parallel main surfaces (4) for the acoustically damping material (10) for absorbing noise from a passing air stream, and
a rear end portion (c) of tapering shape comprising the rear edge (5) of the baffle and adapted to regulating the bringing together of the divided and sound-damped air stream, wherein the frame arrangement (12, 13, 14, 15) has an aperture for each main surface (4) and wherein the shape-stabilizing frame arrangement (12, 13, 14, 15) comprises a back (13) disposed in the rear end portion (c), having a smaller width than the width of the baffle, **characterized in that** the rear end portion (c) comprises a prolongation of the main surfaces (4) and **in that** the back (13) is adapted to accommodating the rear edge of the acoustically damping material (10).

2. A baffle according to claim 1, **characterised in that** the rear end portion (c) has a taper, at least part of which is linear and forms an angle of incidence α to the longitudinal direction of the baffle.

3. A baffle according to any one of the above claims, **characterised in that** the rear end portion (c) has in the longitudinal direction of the baffle an extent w which is within the range 150 ≤ α ≤ 300 mm from the rear edge (5) of the baffle, most preferably w = 240 mm.

4. A baffle according to claims 2 - 3, **characterised in that** the angle α is within the range 5° ≤ α ≤ 12°, most preferably α = 7°.

5. A baffle according to claim 4, **characterised in that** back (13) has a open and substantially U-shaped symmetrical profile with a linear bottom section which also constitutes the rear edge (5) of the baffle and has wings extending from it in a linear manner with an extent which is smaller than or equal to w and has an angle of incidence α to the longitudinal direction of the baffle.

6. A baffle according to claim 5, **characterised in that** the extent of the wings from the bottom section is within a range of between 2w/3 and w/3.

7. A baffle according to any one of claims 1 - 6, **characterised in that** the forward end portion (a) comprises a prolongation of the main surfaces (4).

8. A baffle according to claim 7, **characterized in that** the forward end portion (a) has taper, at least part of which is linear and forms and an angle of incidence β to the longitudinal direction of the baffle.

9. A baffle according to any one of the above claims, **characterised in that** the forward end portion (a) has a planar front (3), a curved edge transition with a radius r and a tapering prolongation of the main surfaces (4).

10. A sound damping arrangement for a ventilation duct, comprising more than one baffle according to any one of claims 1- 9 above, which baffles are disposed in a rectangular section of the ventilation duct and with a constant gap width between main surfaces (4) of the respective middle portion (b) of adjacent baffles.

11. A silencer according to claim 10, **characterised in that** said gap width is within the rage 50 - 150 mm.

## Patentansprüche

1. Wand für einen Schalldämpfer (1) für einen Belüftungskanal, welche Wand (2), wie sowohl von der Seite als auch im vertikalen Querschnitt quer zu ihrer Längsrichtung gesehen, eine rechteckige Form aufweist, ein akustisch dämpfendes Material (10) umfasst, das in einer formstabilisierenden Rahmenanordnung (12, 13, 14, 15) untergebracht ist, und in ihrer Längsrichtung drei Bereiche umfasst, dargestellt durch:
einen vorderen Endabschnitt (a) mit einer sich verjüngenden Form, der die Vorderkante (3) der Wand umfasst und ausgelegt ist, um einen eintretenden Luftstrom zu treffen und zu teilen,
einen mittleren Abschnitt (b), der im Wesentlichen die Form eines rechteckigen Quaders aufweist und mit planparallelen Hauptflächen (4) für das akustisch dämpfende Material (10) zum Absorbieren von Schall aus einem passierenden Luftstrom versehen ist, und
einen hinteren Endabschnitt (c) mit einer sich verjüngenden Form, der die hintere Kante (5) der Wand umfasst und ausgelegt ist, um das Zusammenführen des geteilten und schallgedämpften Luftstroms zu regulieren, wobei die Rahmenanordnung (12, 13, 14, 15) eine Öffnung für jede Hauptfläche (4) aufweist, und wobei die formstabilisierende Rahmenanordnung (12, 13, 14, 15) eine Rückseite (13) aufweist, die in dem hinteren Endabschnitt (c) angeordnet ist, aufweisend eine kleinere Breite als die Breite der Wand,
**dadurch gekennzeichnet, dass** der hintere Endabschnitt (c) eine Verlängerung der Hauptflächen (4) umfasst, **und dass** die Rückseite (13) zur Aufnahme der hinteren Kante des akustisch dämpfenden Materials (10) ausgelegt ist.

2. Wand nach Anspruch 1, **dadurch gekennzeichnet, dass** der hintere Endabschnitt (c) eine Verjüngung aufweist, von der zumindest ein Teil linear ist und einen Einfallswinkel α zur Längsrichtung der Wand bildet.

3. Wand nach einem der vorhergehenden Ansprüche,
**dadurch gekennzeichnet, dass** der hintere Endabschnitt (c) in der Längsrichtung der Wand eine Ausdehnung w aufweist, die innerhalb des Bereichs 150 ≤ α ≤ 300 mm von der hinteren Kante (5) der Wand, am meisten bevorzugt w = 240 mm, liegt.

4. Wand nach den Ansprüchen 2 bis 3, **dadurch gekennzeichnet, dass** der Winkel α innerhalb des Bereichs 5° ≤ α ≤ 12°, am meisten bevorzugt α = 7°, liegt.

5. Wand nach Anspruch 4, **dadurch gekennzeichnet, dass** die Rückseite (13) ein offenes und im Wesentlichen U-förmiges symmetrisches Profil mit einem linearen unteren Teilabschnitt aufweist, welcher ebenfalls die hintere Kante (5) der Wand darstellt und sich in einer linearen Weise davon erstreckende Flügel mit einer Ausdehnung aufweist, die kleiner als oder gleich w ist und einen Einfallswinkel α zur Längsrichtung der Wand aufweist.

6. Wand nach Anspruch 5, **dadurch gekennzeichnet, dass** die Ausdehnung der Flügel vom unteren Teilabschnitt innerhalb eines Bereichs von zwischen 2w/3 und w/3 liegt.

7. Wand nach einem der Ansprüche 1 bis 6, **dadurch gekennzeichnet, dass** der vordere Endabschnitt (a) eine Verlängerung der Hauptflächen (4) umfasst.

8. Wand nach Anspruch 7, **dadurch gekennzeichnet, dass** der vordere Endabschnitt (a) eine Verjüngung aufweist, von der zumindest ein Teil linear ist und einen Einfallswinkel β zur Längsrichtung der Wand bildet.

9. Wand nach einem der vorhergehenden Ansprüche,
**dadurch gekennzeichnet, dass** der vordere Endabschnitt (a) eine ebene Vorderseite (3), einen gekrümmten Kantenübergang mit einem Radius r und eine sich verjüngende Verlängerung der Hauptflächen (4) aufweist.

10. Schalldämpfungsanordnung für einen Belüftungskanal, umfassend mehr als eine Wand nach einem der vorhergehenden Ansprüche 1 bis 9, welche Wände in einem rechteckigen Teilabschnitt des Belüftungskanals und mit einer konstanten Spaltenbreite zwischen Hauptflächen (4) des jeweiligen mittleren Abschnitts (b) von angrenzenden Wänden angeordnet sind.

11. Schalldämpfer nach Anspruch 10, **dadurch gekennzeichnet, dass** die Spaltenbreite innerhalb des Bereichs 50 - 150 mm liegt.

## Revendications

1. Déflecteur pour un silencieux (1) pour un conduit de ventilation, ledit déflecteur (2) étant de forme rectangulaire vue à la fois de côté et en coupe transversale à sa direction longitudinale, comprend un matériau d'amortissement acoustique (10) arrangé dans un dispositif de cadre stabilisateur de forme (12, 13, 14, 15) et comprend dans sa direction longitudinale trois zones représentées par :
une partie d'extrémité avant (a) de forme effilée comprenant le bord avant (3) du déflecteur et adapté pour rencontrer et diviser un flux d'air entrant,
une partie médiane (b) ayant essentiellement la forme d'un cuboïde rectangulaire et pourvue de surfaces principales (4) parallèles dans le plan pour le matériau d'amortissement acoustique (10) pour absorber le bruit d'un flux d'air passant, et
une partie d'extrémité arrière (c) de forme effilée comprenant le bord arrière (5) du déflecteur et adaptée à la régulation du rapprochement du flux d'air divisé et amorti par le son, dans lequel le dispositif de cadre (12, 13, 14, 15) présente un aperture pour chaque surface principale (4) et dans lequel le dispositif de cadre stabilisateur de forme (12, 13, 14, 15) comprend un dos (13) disposé dans la partie d'extrémité arrière (c), ayant une largeur inférieure à la largeur du déflecteur, **caractérisé en ce que** la partie d'extrémité arrière (c) comporte un prolongement des surfaces principales (4), et **en ce que** le dos (13) est adapté pour recevoir le bord arrière du matériau d'amortissement acoustique (10).

2. Déflecteur selon la revendication 1, **caractérisé en ce que** la partie d'extrémité arrière (c) présente une conicité dont au moins une partie est linéaire et forme un angle d'incidence α par rapport à la direction longitudinale du déflecteur.

3. Déflecteur selon l'une quelconque des revendications précédentes, **caractérisé en ce que** la partie d'extrémité arrière (c) présente dans la direction longitudinale du déflecteur, une étendue w comprise entre 150 ≤ α ≤ 300 mm du bord arrière (5) du déflecteur, le plus préférablement w = 240 mm.

4. Déflecteur selon les revendications 2 à 3, **caractérisé en ce que** l'angle α est compris entre 5° ≤ α ≤ 12°, le plus préférablement α = 7°.

5. Déflecteur selon la revendication 4, **caractérisé en ce que** le dos (13) présente un profil symétrique ouvert et essentiellement en forme de U avec une section inférieure linéaire qui constitue également le bord arrière (5) du déflecteur et présente des ailes s'étendant de manière linéaire dont l'étendue est inférieure ou égale à w et présente un angle d'incidence α par rapport à la direction longitudinale du déflecteur.

6. Déflecteur selon la revendication 5, **caractérisé en ce que** l'étendue des ailes de la section inférieure est comprise entre 2w/3 et w/3.

7. Déflecteur selon l'une quelconque des revendications 1 à 6, **caractérisé en ce que** la partie d'extrémité avant (a) comprend un prolongement des surfaces principales (4).

8. Déflecteur selon la revendication 7, **caractérisé en ce que** la partie d'extrémité avant (a) présente une conicité dont au moins une partie est linéaire et forme un angle d'incidence β par rapport à la direction longitudinale du déflecteur.

9. Déflecteur selon l'une quelconque des revendications précédentes, **caractérisé en ce que** la partie d'extrémité avant (a) présente un front plan (3), une transition de bord incurvée avec un rayon r et un prolongement effilé des surfaces principales (4).

10. Dispositif d'insonorisation pour un conduit de ventilation, comprenant plus d'un déflecteur selon l'une quelconque des revendications 1 à 9 ci-dessus, ledit déflecteur étant disposé dans une section rectangulaire du conduit de ventilation et avec une largeur d'espace constante entre les surfaces principales (4) de la partie médiane respective (b) des déflecteurs adjacents.

11. Silencieux selon la revendication 10 **caractérisé en ce que** ladite largeur de la fente est comprise entre 50 et 150 mm.
